# EUROPEAN PATENT SPECIFICATION

(11) **EP 2 075 056 B1**
(45) Date of publication and mention of the grant of the patent: **09.05.2018**
(21) Application number: 08253950.3
(22) Date of filing: 10.12.2008
(51) Int. Cl.: B01J 8/02, B01J 19/26, B01J 8/00, B01D 3/00

(54) **Distributor nozzle for a two-phase charge in fixed-bed reactors**
Verteilerdüse für eine zweiphasige Beschickung in Festbettreaktoren
Buse de distribution pour charge à deux phases dans des réacteurs à lit fixé

(30) Priority: 13.12.2007 BR PI0704849
(43) Date of publication of application: 01.07.2009
(73) Proprietor: Petróleo Brasileiro S.A. Petrobras, Rio de Janeiro, RJ (BR)
(72) Inventor: Vieira, José Antonio Vidal, Rio de Janeiro, RJ (BR); Huziwara, Wilson Kenzo, Rio de Janeiro, RJ (BR); Belato, Donizeti Aurelio Silva, Rio de Janeiro 22.221-070 (BR); Marchiori, Ademaro, Rio de Janeiro, RJ (BR); Lima, Jorge Roberto Duncan, Rio de Janeiro, RJ (BR); Torres, Fabricio, Rio de Janeiro, RJ (BR); Brito, Carlos Otavio, Niterói, RJ (BR)
(74) Representative: J A Kemp

(56) References cited:
- GB-A- 1 353 637
- US-A- 4 140 625
- US-A1- 2005 163 682
- US-A1- 2006 163 758

## Description

The present invention relates to a distributor nozzle for a two-phase (gas/liquid) charge for use in fixed-bed reactors.

The growing worldwide demand for fuels with a lower percentage of pollutants has called for more rigorous fuel specifications, especially as regards the sulphur content. Keeping up with this trend, the manufacturers of petroleum products have invested heavily to improve their refineries, mainly by installing new hydrofining units. These units are designed with rather strict criteria, so as to be able to meet the new specifications for fuels. One of the solutions adopted for this purpose lies in the development of new designs for the inside of reactors, with special emphasis on the quality of distribution.

Hydrofining processes normally use reactors with a downward flow, in which the charge enters at the top of the reactor and is directed towards the catalyst bed. The aim of these units is achieved by chemical reactions that take place in the reactors of these units, where the charge and hydrogen react with each other in the presence of one or more catalyst beds under suitable operational conditions to give the required product.

In processes where the reactor charge is in liquid or partially vaporized form, there are two factors that ensure a good distribution of the stream over the catalyst bed: the main charge distributor and the liquid distributor plate in which the distributors are arranged. The purpose of the distributor plate is to promote the uniform radial distribution of the liquid through the catalyst bed in order to ensure the best contact between the reagents and the catalyst, fully utilizing the amount of catalyst available in the reactor. An irregular distribution of the liquid in the catalyst bed contributes to channelling and the formation of hot-spots. These lead to an inefficient utilization of the catalyst, as well as to inactivation and coke formation, reducing the yield of the process and shortening the service life.

The design of the distributor plate for fixed-bed reactors typically has two objectives: the first is to ensure a full coverage, which usually means maximizing the number of points through which the distributor plate disperses the fluid over the catalyst bed. The second is to ensure a uniform coverage, so that the same amount of fluid is dispersed to all points of the bed. To reach this aim, one of the strategies employed is to use high-performance distributors that ensure the best distribution of the liquid over the catalyst bed in the reactor.

Various types of distributor nozzles for liquids and gases have been patented, but many of them are simply modifications or variants of old designs.

One of the simplest devices comprises little more than a plate with holes in it, while others have various forms of shafts, apertures, baffles, holes or more complicated elements to ensure the required liquid and vapour stream.

US Patent No. 5,158,714 describes a bubbler-type device for the distribution of fluids whose main feature lies in the inclusion of a disperser at the bottom to ensure a better mixing between the two phases. However, the device claimed in US Patent No. 5,158,714 has a low mixture-dispersing capacity, and so its area of action is small.

US Patent 5,462,719 describes a method and device for mixing and distributing fluids in multi-bed reactors with a downward flow. The device described in US Patent 5,462,719 comprises distributor nozzles that have a cap, an opening at the top of the lateral surface for the flow of the vapour, and holes in the sides at three different levels for the flow of the liquid. However, this device similarly has a low mixture-dispersing capacity, and so its area of action is small.

US Patent No. 5,484,578 describes a system for the distribution of two-phase fluids in reactors with downward flow, which system consists of a distributor plate fitted with a number of distributor nozzles. These distributor nozzles have side holes at two different levels, with a fixed distance from the base of the distributor plate, in order to keep a certain liquid level above the tray. These distributor nozzles also have a focused outflow and therefore a small area of action.

US Patent No. 6,613,219 B2 describes a system for the distribution of two-phase fluids in reactors with downward flow. This device comprises a distributor nozzle, with side apertures, an opening at the top and a dispersing system at the bottom, which consists of a perforated deflector plate, whose role is to increase the area over which the distributor nozzle acts.

A US patent published as WO 2005 / 068039 A1 describes a system for the distribution of two-phase fluids in reactors with a downward flow. This distribution system comprises a distributor plate fitted with various distributor nozzles, and two chambers with a rectangular cross-section, one for upward flow and one for downward flow, in order to ensure the mixing of the two fluids. However, these distributor nozzles have a focused outflow and therefore a small area of action.

US 2005/0163682 discloses a distribution apparatus that includes a plate with a number of bubble caps and associated drip trays that multiply the liquid drip stream from the bubble caps to symmetrically distribute the fluids across a catalyst surface. Deflector baffles may be associated with the bubble caps to provide a wider and more uniform liquid distribution below the plate.

GB 1 353 637 discloses a flow distributing apparatus for use above a contact bed in a reactor chamber. The apparatus relates to a mixed phase fluid distributor for placement at the top of a downflow catalytic reactor.

US 4,140,625 discloses a distribution of a mixed-phase, vapor/liquid reactant stream to a fixed-bed of catalyst particles through the use of a distributor tray in the form of a horizontal plate (or deck) having a plurality of vertically-disposed venturi-shaped eductors.

According to the present invention, there is provided a distributor nozzle for distributing a two-phase charge in a fixed-bed reactor, according to claim 1.

The at least one fixing element can be vertical or inclined towards either the inside or outside wall of said shaft.

The deflector cone or deflector cone frustum can be configured to change the direction of at least a part of the flow two-phase charge. The deflector cone or deflector cone frustum can be provided with at least one evenly spaced aperture formed in the deflector cone or deflector cone frustum.

The vertical extensions can be vertical directing elements that are located at the edge of the deflector cone or deflector cone frustum and are aligned with the centres of the apertures, the vertical directing elements being configured to direct the flow of the two-phase charge.

The distributor nozzle of the present invention comprises an accelerating section that is located at the end of the shaft closest to the deflector cone or deflector cone frustum, the accelerating section being configured to increase the velocity of the two-phase flow and so improve its distribution. The deflector cone or deflector cone frustum can be configured to change the direction of part of the two-phase flow and be provided, on its surface, with a number of evenly spaced slits whose role is to further direct the flow of the two-phase charge.

The distributor nozzle of the present invention comprises an accelerating section that is located at the end of the shaft closest to said deflector cone or deflector cone frustum, the accelerating section being configured to increase the velocity of the two-phase flow and so improve its distribution, and the deflector cone or deflector cone frustum can be configured to change the direction of at least a part of the two-phase charge flow and be provided with at least one evenly spaced aperture formed in the cone.

In the distributor nozzle, the deflector cone or deflector cone frustum can have an included angle in the range of from 45° to 170°.

The deflector cone or deflector cone frustum of the distributor nozzle can comprise one cone frustum with a first included angle connected to either (i) another cone frustum with a second included angle or (ii) a cone with a second included angle.

The present invention also provides a method according to claim 8.

The method can comprise providing the two-phase flow to the deflector cone or deflector cone frustum using a shaft.

The method can comprise accelerating the two-phase flow before it reaches the deflector cone or deflector cone frustum. This can improve the distribution of the two-phase flow.

The deflector cone or deflector cone frustum can be either solid or hollow.

The distributor nozzle can comprise three fixing bars and six vertical directing elements, and the deflector cone or deflector cone frustum can have six apertures formed in the cone.

The distributor nozzle can comprise three fixing bars and three supports, and the deflector cone or deflector cone frustum can have six slits in it.

The distributor nozzle can comprise three fixing and directing bars, and the deflector cone or deflector cone frustum can have three apertures formed in the cone.

In embodiments with a cage, the distributor nozzle can comprise three cone-fixing bars and six cage-fixing bars, and the cage can have six channels.

An aim of the present invention is to improve the quality of distribution and the liquid/vapour contact by designing the geometry and dimensions of the distributor nozzle so as to improve the liquid/vapour contact and ensure that the liquid leaving the nozzle through its lower end is dispersed in such a way that the top layer of the bed in the reactor is wetted uniformly.

The present invention can comprise a distributor nozzle that comprises a deflector cone, which can wet an area of the bed below it without depending on the action of adjacent nozzles. This improves the quality of the distribution and minimizes the "shading" or blocking effect of the fixing bars, without restricting the outlet area in comparison with the inlet apertures. To ensure the wetting of the area lying directly below the deflector cone, there may be provided slits or holes formed in the body of the deflector cone. Small vertical flow-directing elements can also be used at the bottom of the cone, as can directing frames or "cages", whose role is to redistribute the flow. Furthermore, the spacing, dimensions and other details can be chosen to minimize the areas left dry by the "shading" or blocking effect of the fixing bars. The present invention thus comprises a deflector cone or deflector cone frustum for reducing the dry area in the "shadow" of the deflector cone or deflector cone frustum and/or projecting legs associated with the deflector cone or deflector cone frustum.

According to the present invention there is provided apparatus comprising a distributor nozzle for a two-phase charge for use in fixed-bed reactors, which device comprises a deflection system at its outlet in order to increase the area over which the mixture is dispersed and to ensure that it has a uniform flow rate over the whole area of the bed in the reactor. The distributor nozzle of the present invention can be simple to make and can use materials that are well-known in the art.

The present invention relates to a distributor nozzle for a two-phase charge, for use in fixed-bed reactors, which distributor nozzle is used to increase the area over which the mixture is dispersed and to ensure its uniform flow rate over the whole area of the bed in the reactor.

According to one embodiment, there is provided a distributor nozzle comprising the following parts:
a) a deflector cone or a deflector cone frustum, which may be solid or hollow and whose angle can vary between 60 and 170°,
b) fixing bars or legs, for fixing the cone in a shaft, which are vertical or inclined towards the inside or outside wall of the shaft and extend from the top, bottom or side of the cone, and
c) flow-redirecting elements to ensure the wetting of the area that lies directly under the cone.

According to one embodiment there is provided a distributor nozzle for a two-phase charge in fixed-bed reactors, comprising the following components:
- a deflector cone or deflector cone frustum that can be either solid or hollow, depending on its shape and manufacturing process, and which has a variable angle, or alternatively more than one angle, for improving the distribution and reducing the dry area in the "shadow" of the projecting legs and the deflector cone or deflector cone frustum itself;
- one or more fixing bars or legs for fixing the deflector cone or deflector cone frustum in the shaft, which bars or legs are vertical or inclined towards the inside or outside wall of the shaft and extend from the top, bottom or side of the deflector cone or cone frustum;
- one or more flow-redirecting devices configured to ensure the wetting of the region that lies directly below the cone, which devices may be formed by small channels, holes or slits in the deflector cone, by vertical extensions of the cone itself (in the form of "teeth") or by a combination of these devices with the legs, in order to help to redirect part of the liquid stream.

Different embodiments can have different constructions.

The invention will now be described in detail with reference to the drawings mentioned above, which are attached only by way of example but are an integral part of the present description, where:
- Fig. 1: shows a schematic drawing of a fixed-bed reactor
- Fig. 2A: shows a bottom view of a distributor nozzle for a two-phase charge
- Fig. 2B: shows a cross-section of a distributor nozzle for a two-phase charge of Fig. 2A
- Fig. 3A: shows a bottom view of a distributor nozzle for a two-phase charge
- Fig. 3B: shows a cross-section of the distributor nozzle for a two-phase charge of Fig. 3A
- Fig. 4A: shows a bottom view of an embodiment of the distributor nozzle for a two-phase charge
- Fig. 4B: shows a cross-section of an embodiment of the distributor nozzle for a two-phase charge of Fig. 4A
- Fig. 5A: shows a bottom view of an embodiment of the distributor nozzle for a two-phase charge
- Fig. 5B: shows a cross-section of the embodiment of the distributor nozzle for a two-phase charge of Fig. 5A
- Fig. 6A: shows a bottom view of a distributor nozzle for a two-phase charge, and
- Fig. 6B: shows a cross-section of the distributor nozzle for a two-phase charge of Fig. 6A.

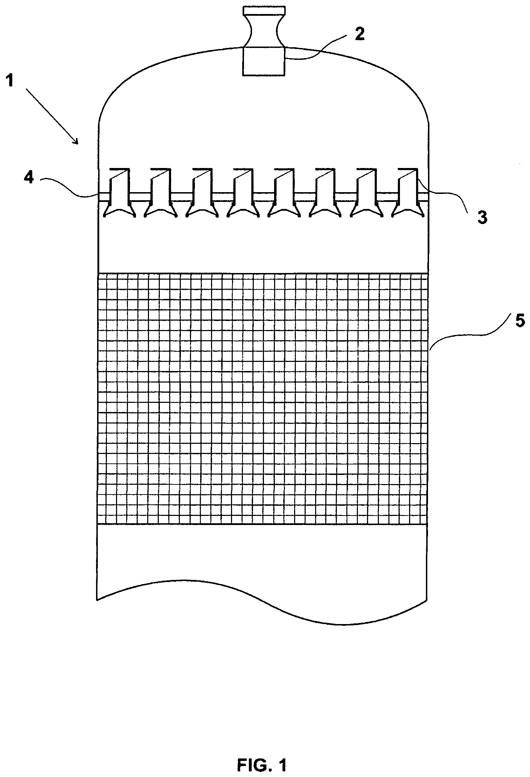

Fig. 1 shows a simplified drawing of a fixed-bed reactor (1) in which distributors (3) are used. The two-phase charge enters the fixed-bed reactor (1) through a main charge distributor (2) and passes through a distributor plate (4) that has a number of distributors (3) in it. The charge passes through the distributors (3), whose role is to distribute the said two-phase charge homogeneously over the surface of the catalyst bed (5). It should be noted that Fig. 1 is only included to illustrate the use of the distributor nozzles (3) in a fixed-bed reactor (1).

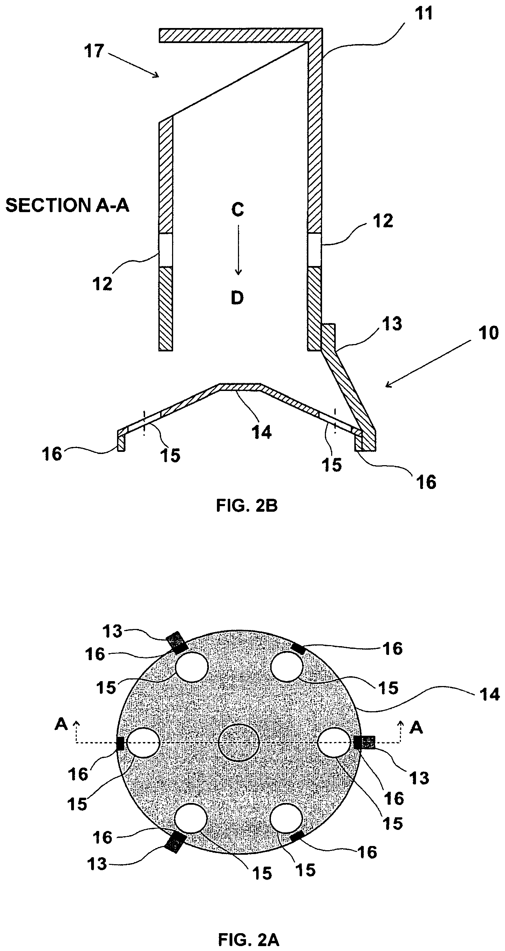

The distributor (3) can consist of a shaft and a distributor nozzle. In some versions it only consists of a shaft. The function of the distributor nozzle at the bottom of the shaft is to ensure a more homogeneous distribution of the charge over the catalyst bed. It should be noted that the shaft itself is not part of the claimed invention but is shown in Figs. 2-6 to help explain the operation of the distributor nozzle. However, in some embodiments, the shaft could be incorporated.

A distributor nozzle according to one embodiment comprises the following elements, each of which can have various structural alternatives:
- A deflector cone or a deflector cone frustum, which may be solid or hollow and whose angle (or included angle) can vary between 45 and 170°.
The upper surface of the cone frustum can have a diameter of 0-15 mm, while its bottom surface can have a diameter of 15-60 mm. Alternatively, the cone or cone frustum can have more than one angle in order to improve the distribution and reduce the dry area lying in the "shadow" of the legs. As used herein, in the description and claims, the term "included angle" with reference to a cone or cone frustum means the angle between opposite line segments (or generatrix) of the conic surface. Opposite line segments are line segments that are rotated by 180° from each other about the axis of the cone. Opposite line segments could be created by taking a cross-section through the conic surface of the cone or cone frustum using a plane that includes the axis of the cone (the axis running through the apex of the cone). Where the term "included angle" refers to a cone frustum, this is the angle that would be formed by two opposite line segments if they were extended to meet at the apex of the cone from which the cone frustum can be generated. Thus, the angle θ shown in Fig. 2B is the "included angle" of the deflector cone frustum 14.
- Fixing bars or legs for fixing the cone in the shaft, which bars or legs are vertical or inclined towards the inside or outside wall of the shaft and extend from the top, bottom or side of the cone.
- Flow-redirecting devices to ensure and/or optimize the wetting of the area that lies directly below the cone.
These flow re-directing devices may be small channels, holes or slits formed in the deflector cone, or they may be vertical extensions of the cone itself (in the form of "teeth"), or else a combination of these devices with the legs, to help redirect part of the liquid stream.

Fig. 2 (which includes Figs. 2A and 2B) shows a type of distributor nozzle (10) for a two-phase charge, comprising a number of fixing bars (13) and a deflector cone frustum (14). Fig. 2A shows a shaft (11), which may be a cylindrical shell with an opening (17) at the top and a number of apertures (12) along its body.

The deflector cone frustum (14) can have an included angle of 120°, six evenly spaced orifices (15) made in the cone, and a number of vertical directing elements (16) that are located at the edge of the cone and are aligned with the centres of the holes. The deflector cone frustum (14) is connected to the lower end of the shaft (11) with the aid of a number of fixing bars (13).

The two-phase mixture is passed into the fixed-bed reactor (1) under pressure, entering the shaft (11) both through the opening (17) and through the apertures (12). The vapour phase preferably enters the shaft through the opening (17), and the liquid phase preferably enters it through the apertures (12). Once inside the shaft (11), the two-phase mixture moves downward in the C-D direction. When it reaches the deflector cone frustum (14), the two-phase mixture is diverted towards the generatrix (or conical/frustro-conical surface) of the deflector cone frustum (14), and part of the mixture passes through the apertures (15) formed in the cone. The deflector cone is fitted with a number of vertical directing elements (16), pointing in the direction of the apertures (15) (that is to say in the direction of the axes of the apertures (15)) formed in the cone. The function of these directing elements is to help direct part of the two-phase stream flowing through the apertures (15) in the cone, so that it flows towards the bottom of the deflector cone frustum (14).

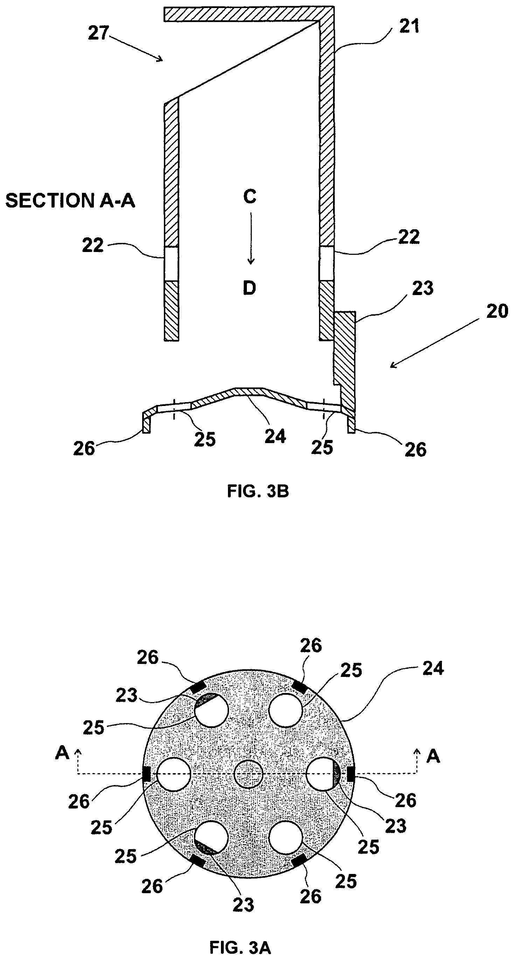

Fig. 3 (which includes Figs. 3A and 3B) shows another type of distributor nozzle (20) for a two-phase charge. This distributor nozzle comprises a number of fixing bars (23) and a deflector cone frustum (24) that has more than one angle. Fig. 3B shows a shaft (21), which is likewise a cylindrical shell with an opening (27) at the top and a number of apertures (22) along its body. The deflector cone frustum (24) is connected to the bottom of the shaft (21) with the aid of a number of fixing bars (23).

The truncated deflector cone (24) has some frusta with an included angle of 120° and an included angle of 160°. In other words, the deflector cone 24 can comprise two connected cone frusta with different included angles. A first cone frustum with one included angle can form the deflector cone surface between the outer radius of the deflector cone surface and an intermediate radius, and a second cone frustum with a different included angle can form the deflector cone surface between the intermediate radius (where it is connected to the first cone frustum) and an inner radius. In other embodiments, the deflector cone 24 can comprise more than 2 (for example 3, 4, 5, 6, etc.) cones and/or cone frustums. A number of evenly spaced apertures (25) can be formed in the cone or cone frusta. In the example shown in Fig. 3, the apertures (25) are located in the 160° cone frustum (i.e. the cone frustum forming the outer radii of the deflector cone (24)). A number of vertical directing elements (26) may be located at the edge of the outer cone frustum and aligned with the centrelines of the apertures (25) formed in the cone.

In the figures, the dimensions and angles are not necessarily to scale. For example, where an included angle is stated as being 120°, the actual included angle in the figure may be greater than or less than 120°.

It should be noted that in the case of this embodiment the angles of the deflector cone frustum (24), the number of apertures (25) in the cone, the number of vertical flow-directing elements (26) and the number of fixing bars (23) must not be considered to limit the scope of the invention.

The two-phase mixture is passed into the fixed-bed reactor (1) under pressure, entering the shaft (21) both through the opening (27) and through the apertures (22). The vapour phase preferably enters the shaft through the opening (27), and the liquid phase preferably enters it through the apertures (22). Once inside the shaft (21), the two-phase mixture moves downward in the C-D direction. When it reaches the deflector cone frustum (24), the two-phase mixture is diverted towards the generatrix of the deflector cone frustum (24), and part of the mixture passes through the apertures (25) formed in the cone. The deflector cone is fitted with a number of vertical directing elements (26), pointing in the direction of the apertures (25) formed in the cone. The function of these directing elements is to help direct part of the two-phase stream flowing through the apertures (25) formed in the cone, so that it flows towards the bottom of the deflector cone frustum (24). In this embodiment, both the vertical directing elements (26) and the bottom of the fixing bars (23) have a rectangular cross-section. However, they can also have a different cross-section, such as trapezoidal, semicircular or trough-like.

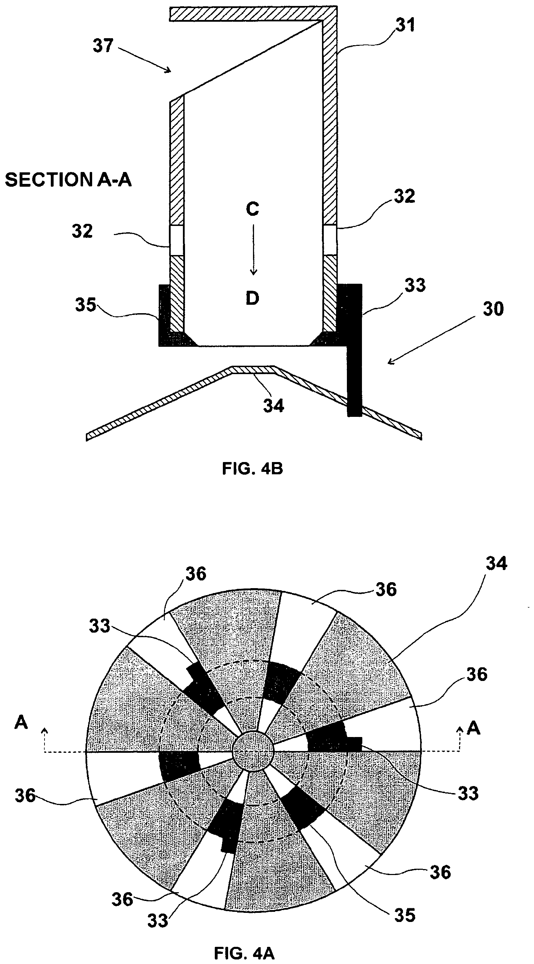

Fig. 4 (which includes Figs. 4A and 4B) shows an embodiment of distributor nozzle (30) for a two-phase charge of the present invention. This device comprises a number of fixing bars (33), an accelerating section (35) for the two-phase stream, and a deflector cone frustum (34). The shaft (31) shown in Fig. 4B can be a cylindrical shell with an opening (37) at the top and a number of apertures (32) along its body.

In this embodiment, the truncated deflector cone (34) has a cone frustum with an included angle of 120° and with a number of evenly spaced slits (36) formed in its upper surface. The deflector cone frustum (34) is connected to the acceleration section (35) with the aid of a number of fixing bars (33). The fixing bars (33) are connected to the accelerating section (35), where the diameter of the outlet end of the shaft (31) is reduced either at an angle or abruptly, in order to speed up the flow of the two-phase stream and so improve its distribution. The accelerating section (35) is fixed to the bottom of the shaft (31).

It should be noted that in the case of this embodiment too the angle of the deflector cone frustum (34), the number of slits (36), the number of fixing bars (33) and the percentage reduction of the flow area in the accelerating section (35) must not be considered to limit the scope of the invention.

The two-phase mixture is passed into the fixed-bed reactor (1) under pressure, entering the shaft (31) both through the opening (37) and through the apertures (32). The vapour phase preferably enters the shaft through the opening (37), and the liquid phase preferably enters it through the apertures (32). Once inside the shaft (31), the two-phase mixture moves downward in the C-D direction and is accelerated when flowing through the accelerating section (35). When the stream reaches the deflector cone frustum (34), the two-phase mixture is diverted towards the generatrix of the deflector cone frustum (44), and part of the mixture passes through the slits (36) to impinge on the area below the deflector cone frustum.

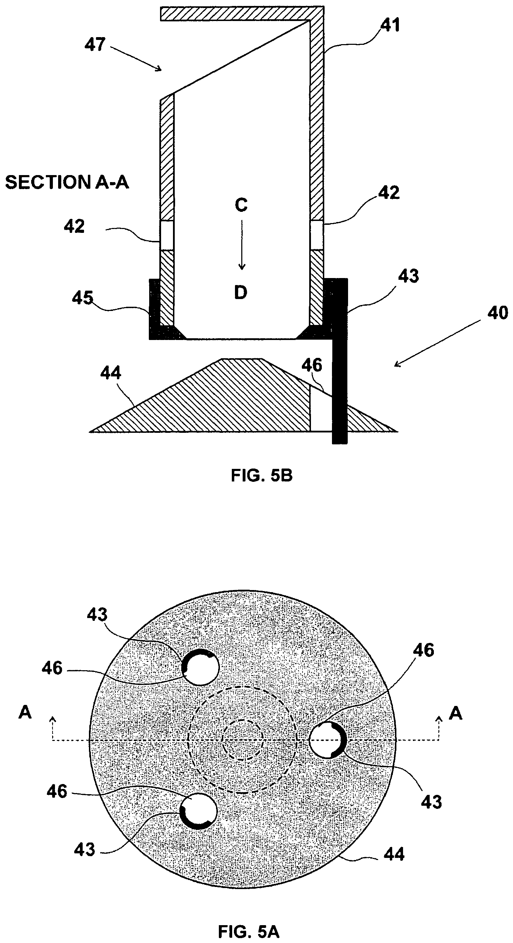

Fig. 5 (which includes Figs. 5A and 5B) shows another embodiment, which is another type of distributor nozzle (40) for a two-phase charge. This device comprises a number of fixing and directing bars (43), an accelerating section (45) for the two-phase stream, and a deflector cone frustum (44). Fig. 5B also shows a shaft (41), which can be a cylindrical shell with an opening (47) at the top and a number of apertures (42) along its body.

In this embodiment, the truncated deflector cone (44) is a solid cone frustum with an included angle of 90° and three evenly spaced apertures (46) formed in the cone. The deflector cone frustum (44) is connected to the accelerating section (45) with the aid of a number of fixing and directing bars (43). The fixing and directing bars (43) are fixed to the accelerating section (45), where the diameter of the outlet end of the shaft (41) is reduced either at an angle or abruptly in order to speed up the two-phase stream and so improve its distribution. The accelerating section (45) is fixed to the bottom of the shaft (41).

It should be noted in the case of this embodiment too that the angle of the deflector cone frustum (44), the apertures (46) formed in the cone, the number of fixing and directing bars (43) and the percentage reduction in the flow area of the accelerating section (45) must not be considered to limit the scope of the invention.

The two-phase mixture is passed into the fixed-bed reactor (1) under pressure, entering the shaft (41) through both the opening (47) and the apertures (42). The vapour phase preferably enters the shaft through the opening (47), and the liquid phase preferably enters it through the apertures (42). Once in the shaft (41), the two-phase mixture moves downwards in the C-D direction. When it reaches the deflector cone frustum (44), the two-phase mixture is diverted towards the generatrix of the deflector cone frustum (44), and part of the mixture passes through the apertures (46) formed in the cone. The part of the stream passing through the apertures (46) formed in the cone is diverted by the bottom of the fixing and directing bars (43) and follows the C-D direction.

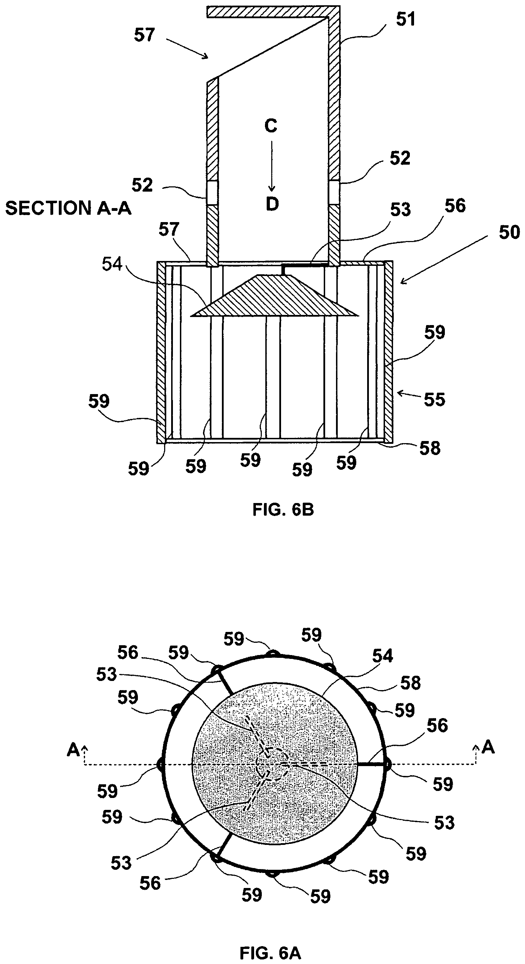

Fig. 6 (which includes Figs. 6A and 6B) shows another distributor nozzle (50) for a two-phase charge. This device comprises a number of cone-fixing bars (53), a deflector cone frustum (54), a directing cage or frame (55) and a number of fixing bars (56) for this cage (56). Fig. 6b also shows a shaft (51), which can be a cylindrical shell with an opening (57) at the top and a number of apertures (52) along its body.

The truncated deflector cone (54) is a solid cone frustum with an angle of 90°, which is connected to the shaft (51) with the aid of a number of cone-fixing bars (53). The directing cage (55) is directly fixed to the outside of the shaft (51) with the aid of a number of cage-fixing bars (56). The directing cage (55) has an upper rim (57) and a lower rim (58), together with a number of small channels (59).

It should be noted in the case of this distributor that the angle of the deflector cone frustum (54), the number of cone-fixing bars (53), the number of the small channels (59) and the number of cage-fixing bars (56) must not be limiting.

The two-phase mixture is passed into the fixed-bed reactor (1) under pressure, entering the shaft (51) both through the opening (57) and through the apertures (52). The vapour phase preferably enters the shaft through the opening (57), and the liquid phase preferably enters it through the apertures (52). Once inside the shaft (51), the two-phase mixture moves downward in the C-D direction. When it reaches the deflector cone frustum (54), the two-phase mixture is diverted towards the generatrix of the deflector cone frustum (54), and part of the mixture is diverted by the directing cage (55) and follows the C-D direction.

The components of the distributor nozzles (10, 20, 30, 40 and 50) for a two-phase charge, forming the subject of the present invention, can be made of known materials and means of fixing. For example, the components of the distributor nozzles (10, 20, 30, 40 and 50) for the two-phase charge can be made of carbon steel, stainless steel or any other metallic or non-metallic material that has the mechanical and physicochemical properties needed for the task in question. Moreover, the components of the distributor nozzles (10, 20, 30, 40 and 50) for a two-phase charge can be fixed by adhesive means, welding or any other means of fixing, which may be known.

It is important to note that the shapes, dimensions and mutual position of the components of the distributor nozzles (10, 20, 30, 40 and 50) for a two-phase charge must not be considered to limit the scope of the present invention and are given here merely to demonstrate the feasibility of the embodiments.

It should also be noted here that, although some aspects of the fabrication and mounting of the distributor nozzles (10, 20, 30, 40 and 50) for a two-phase charge can involve the use of some components known from the prior art, the claimed arrangement described herein forms a novel and innovative whole.

The invention has been described here in the form of preferred embodiments but is not limited to them. The present invention is in fact only limited to the contents of the following claims, which define its entire scope.

## Claims

1. A distributor nozzle (30, 40) for distributing a two-phase charge in a fixed-bed reactor, said distributor nozzle comprising:
a deflector cone or deflector cone frustum (34, 44) arranged to improve the distribution of the two-phase flow;
a shaft (31) configured to provide the two-phase flow to the deflector cone or deflector cone frustum (34); and
at least one flow-redirecting device (33/36, 43/46) configured to redirect at least a part of the two-phase flow, thereby providing the two-phase flow to the region of the fixed-bed reactor that lies below the deflector cone or deflector cone frustum (34, 44);
at least one fixing element (33, 43) configured to fix the deflector cone or deflector cone frustum (34, 44) to the shaft (31) the or each at least one fixing element (33, 43) extending from the top, bottom or side of the deflector cone or cone frustum (34, 44); and
an accelerating section (35) that is located at the end of the shaft (31) that is closest to the deflector cone or deflector cone frustum (34), the accelerating section (35) being configured to increase the velocity of the two-phase flow and so improve its distribution,
wherein
said at least one flow-redirecting device (33/36, 43/46) comprises holes or slits formed in the deflector cone or deflector cone frustum (34, 44) optionally in combination with vertical extensions of the cone itself, **characterised in that**:
said at least one fixing element is a fixing and directing bar, the bottom of the fixing and directing bar being configured to divert the flow, passing through said holes or slits, towards the vertical direction; and
said at least one flow-redirecting device (36, 46) is a combination of said holes or slits, optionally in combination with said vertical extensions, with the at least one fixing element (33, 43).

2. A distributor nozzle (30, 40) according to claim 1, wherein said at least one fixing element (33, 43) is vertical or inclined towards either the inside or outside wall of said shaft.

3. A distributor nozzle (30, 40) for a two-phase charge in a fixed-bed reactor according to claim 1 or claim 2, wherein:
said at least one fixing element comprises at least one fixing bar, configured to fix the deflector cone or deflector cone frustum to the bottom of said shaft (11);
said deflector cone or deflector cone frustum is configured to change the direction of at least a part of the flow two-phase charge, the deflector cone or deflector cone frustum being provided with at least one evenly spaced aperture formed in the deflector cone or deflector cone frustum; and
said at least one flow-redirecting device comprises vertical directing elements that are located at the edge of said deflector cone or deflector cone frustum and are aligned with the centres of said apertures, the vertical directing elements being configured to direct the flow of the two-phase charge.

4. A distributor nozzle for a two-phase charge in a fixed-bed reactor according to any one of the preceding claims, further comprising:
an accelerating section (35) that is located at the end of the shaft (31) closest to said deflector cone or deflector cone frustum (34), the accelerating section (35) being configured to increase the velocity of the two-phase flow and so improve its distribution, wherein:
said at least one fixing element (33, 43) is configured to fix the deflector cone or deflector cone frustum (34) to the accelerating section (35); and
said deflector cone or deflector cone frustum (34), is configured to change the direction of part of the two-phase flow and is provided, on its surface, with a number of evenly spaced slits (36), whose role is to further direct the flow of the two-phase charge.

5. A distributor nozzle (30, 40) for a two-phase charge in a fixed-bed reactor according to any one of the preceding claims, further comprising:
an accelerating section (45) that is located at the end of the shaft (41) closest to said deflector cone or deflector cone frustum (44), the accelerating section (45) being configured to increase the velocity of the two-phase flow and so improve its distribution, wherein:
said at least one fixing element is configured to fix the deflector cone or deflector cone frustum (44) to the accelerating section (45) and to direct the flow of the two-phase charge, and
said deflector cone or deflector cone frustum (44) is configured to change the direction of at least a part of the two-phase charge flow and is provided with at least one evenly spaced aperture (46) formed in the cone.

6. A distributor nozzle (30, 40) for a two-phase flow according to any one of the proceeding claims, wherein said deflector cone or deflector cone frustum has an included angle in the range of from 45° to 170°.

7. A distributor nozzle (30, 40) for a two-phase flow according to any one of the proceeding claims, wherein said deflector cone or deflector cone frustum comprises one cone frustum with a first included angle connected to either (i) another cone frustum with a second included angle or (ii) a cone with a second included angle.

8. A method for distributing a two-phase charge in a fixed-bed reactor using a distributor nozzle (30, 40) according to claim 1, the method comprising:
distributing the two-phase flow using the deflector cone or deflector cone frustum (34, 44) **characterised by**:
redirecting at least a part of the two-phase flow, using the at least one flow-redirecting device (33/36, 43/46).

9. A method for distributing a two-phase charge in a fixed-bed reactor using a distributor nozzle (30, 40) according to claim 8, further comprising:
providing the two-phase flow to the deflector cone or deflector cone frustum (34, 44) using the shaft (31).

10. A method for distributing a two-phase charge in a fixed-bed reactor using a distributor nozzle (30, 40) according to claim 8 or claim 9, further comprising:
accelerating the two-phase flow before it reaches the deflector cone or deflector cone frustum (34, 44).

## Patentansprüche

1. Verteilerdüse (30, 40) zum Verteilen einer Zweiphasenladung in einem Festbettreaktor, wobei die Verteilerdüse Folgendes umfasst:
einen Deflektorkegel oder Deflektorkegelstumpf (34, 44), der angeordnet ist, um die Verteilung der Zweiphasenströmung zu verbessern;
eine Welle (31), die konfiguriert ist, um dem Deflektorkegel oder Deflektorkegelstumpf (34) die Zweiphasenströmung bereitzustellen; und
mindestens eine Strömungsumleitvorrichtung (33/36, 43/46), die konfiguriert ist, um mindestens einen Teil der Zweiphasenströmung umzuleiten, wodurch die Zweiphasenströmung dem Bereich des Festbettreaktors bereitgestellt wird, der unter dem Deflektorkegel oder Deflektorkegelstumpf (34, 44) liegt;
mindestens ein Befestigungselement (33, 43), das konfiguriert ist, um den Deflektorkegel oder Deflektorkegelstumpf (34, 44) an der Welle (31) zu befestigen, wobei sich das oder jedes mindestens eine Befestigungselement (33, 43) von der Oberseite, dem Boden oder der Seite des Deflektorkegels oder Deflektorkegelstumpfs (34, 44) erstreckt; und
einen Beschleunigungsabschnitt (35), der sich am Ende der Welle (31) befindet, die dem Deflektorkegel oder Deflektorkegelstumpf (34) am nächsten ist, wobei der Beschleunigungsabschnitt (35) konfiguriert ist, um die Geschwindigkeit der Zweiphasenströmung zu erhöhen und damit ihre Verteilung zu verbessern,
wobei
die mindestens eine Strömungsumleitvorrichtung (33/36, 43/46) Löcher oder Schlitze umfasst, die in dem Deflektorkegel oder Deflektorkegelstumpf (34, 44) optional in Kombination mit vertikalen Erweiterungen des Kegels selbst gebildet sind, **dadurch gekennzeichnet, dass**:
das mindestens eine Befestigungselement eine Befestigungs- und Leitstange ist, wobei der Boden der Befestigungs- und Leitstange konfiguriert ist, um die Strömung abzuleiten, die durch die Löcher oder Schlitze zu der vertikalen Richtung verläuft; und
die mindestens eine Strömungsumleitvorrichtung (36, 46) eine Kombination der Löcher oder Schlitze, optional in Kombination mit den vertikalen Erweiterungen, mit dem mindestens einen Befestigungselement (33, 43) ist.

2. Verteilerdüse (30, 40) nach Anspruch 1, wobei das mindestens eine Befestigungselement (33, 43) vertikal oder zu entweder der Innen- oder Außenwand der Welle geneigt ist.

3. Verteilerdüse (30, 40) für eine Zweiphasenladung in einem Festbettreaktor nach Anspruch 1 oder Anspruch 2, wobei:
das mindestens eine Befestigungselement mindestens eine Befestigungsstange umfasst, die konfiguriert ist, um den Deflektorkegel oder Deflektorkegelstumpf an dem Boden der Welle (11) zu befestigen;
der Deflektorkegel oder Deflektorkegelstumpf konfiguriert ist, um die Richtung von mindestens einem Teil der Zweiphasenströmungsladung zu verändern, wobei der Deflektorkegel oder Deflektorkegelstumpf mit mindestens einer gleichmäßig beabstandeten Öffnung bereitgestellt ist, die in dem Deflektorkegel oder Deflektorkegelstumpf gebildet ist; und
die mindestens eine Strömungsumleitvorrichtung vertikale Leitelemente umfasst, die sich an der Kante des Deflektorkegels oder Deflektorkegelstumpfs befinden und an den Mittelpunkten der Öffnungen ausgerichtet sind, wobei die vertikalen Leitelemente konfiguriert sind, um die Strömung der Zweiphasenladung zu leiten.

4. Verteilerdüse für eine Zweiphasenladung in einem Festbettreaktor nach einem der vorhergehenden Ansprüche, ferner umfassend:
einen Beschleunigungsabschnitt (35), der sich am Ende der Welle (31) befindet, die dem Deflektorkegel oder Deflektorkegelstumpf (34) am nächsten ist, wobei der Beschleunigungsabschnitt (35) konfiguriert ist, um die Geschwindigkeit der Zweiphasenströmung zu erhöhen und damit ihre Verteilung zu verbessern, wobei:
das mindestens eine Befestigungselement (33, 43) konfiguriert ist, um den Deflektorkegel oder Deflektorkegelstumpf (34) an dem Beschleunigungsabschnitt (35) zu befestigen; und
der Deflektorkegel oder Deflektorkegelstumpf (34) konfiguriert ist, um die Richtung eines Teils der Zweiphasenströmung zu verändern und an seiner Oberfläche mit mehreren gleichmäßig beabstandeten Schlitzen (36) bereitgestellt ist, deren Aufgabe es ist, die Strömung der Zweiphasenladung ferner zu leiten.

5. Verteilerdüse (30, 40) für eine Zweiphasenladung in einem Festbettreaktor nach einem der vorhergehenden Ansprüche, ferner umfassend:
einen Beschleunigungsabschnitt (45), der sich am Ende der Welle (41) befindet, das dem Deflektorkegel oder Deflektorkegelstumpf (44) am nächsten ist, wobei der Beschleunigungsabschnitt (45) konfiguriert ist, um die Geschwindigkeit der Zweiphasenströmung zu erhöhen und damit ihre Verteilung zu verbessern, wobei:
das mindestens eine Befestigungselement konfiguriert ist, um den Deflektorkegel oder Deflektorkegelstumpf (44) an dem Beschleunigungsabschnitt (45) zu befestigen und um die Strömung der Zweiphasenladung zu leiten; und
der Deflektorkegel oder Deflektorkegelstumpf (44) konfiguriert ist, um die Richtung von mindestens einem Teil der Zweiphasenladungsströmung zu verändern, und mit mindestens einer gleichmäßig beabstandeten Öffnung (46) bereitgestellt ist, die in dem Kegel gebildet ist.

6. Verteilerdüse (30, 40) für eine Zweiphasenströmung nach einem der vorhergehenden Ansprüche, wobei der Deflektorkegel oder Deflektorkegelstumpf einen eingeschlossenen Winkel in dem Bereich von 45 ° bis 170 ° hat.

7. Verteilerdüse (30, 40) für eine Zweiphasenströmung nach einem der vorhergehenden Ansprüche, wobei der Deflektorkegel oder Deflektorkegelstumpf einen Kegelstumpf mit einem ersten eingeschlossenen Winkel umfasst, der mit entweder (i) einem anderen Kegelstumpf mit einem zweiten eingeschlossenen Winkel oder (ii) einem Kegel mit einem zweiten eingeschlossenen Winkel verbunden ist.

8. Verfahren zum Verteilen einer Zweiphasenladung in einem Festbettreaktor unter Verwendung einer Verteilerdüse (30, 40) nach Anspruch 1, wobei das Verfahren Folgendes umfasst:
Verteilen der Zweiphasenströmung unter Verwendung des Deflektorkegels oder Deflektorkegelstumpfs (34, 44), **gekennzeichnet durch**:
Umleiten von mindestens einem Teil der Zweiphasenströmung unter Verwendung der mindestens einen Strömungsumleitvorrichtung (33/36, 43/46).

9. Verfahren zum Verteilen einer Zweiphasenladung in einem Festbettreaktor unter Verwendung einer Verteilerdüse (30, 40) nach Anspruch 8, ferner umfassend:
Bereitstellen der Zweiphasenströmung für den Deflektorkegel oder Deflektorkegelstumpf (34, 44) unter Verwendung der Welle (31).

10. Verfahren zum Verteilen einer Zweiphasenladung in einem Festbettreaktor unter Verwendung einer Verteilerdüse (30, 40) nach Anspruch 8 oder Anspruch 9, ferner umfassend:
Beschleunigen der Zweiphasenströmung, bevor sie den Deflektorkegel oder Deflektorkegelstumpf (34, 44) erreicht.

## Revendications

1. Buse de distributeur (30, 40) destinée à distribuer une charge biphasique dans un réacteur à lit fixe, ladite buse de distributeur comprenant :
un cône déflecteur ou tronc de cône déflecteur (34, 44) agencé pour améliorer la distribution du flux biphasique ;
un arbre (31) conçu pour fournir le flux biphasique au cône déflecteur ou tronc de cône déflecteur (34) ; et
au moins un dispositif de redirection de flux (33/36, 43/46) conçu pour rediriger au moins une partie du flux biphasique pour ainsi fournir le flux biphasique à la région du réacteur à lit fixe qui se trouve sous le cône déflecteur ou tronc de cône déflecteur (34, 44);
au moins un élément fixant (33, 43) conçu pour fixer le cône déflecteur ou tronc de cône déflecteur (34, 44) à l'arbre (31), l'élément fixant ou chaque élément fixant (33, 43) s'étendant depuis le sommet ou le côté du cône déflecteur ou tronc de cône déflecteur (34, 44) ; et
une section d'accélération (35) qui est située à l'extrémité de l'arbre (31) qui est la plus proche du cône déflecteur ou tronc de cône déflecteur (34), la section d'accélération (35) étant conçue pour élever la vitesse du flux biphasique et ainsi améliorer sa distribution,
dans laquelle
ledit au moins un dispositif de redirection de flux (33/36, 43/46) comprend des trous ou des fentes formés dans le cône déflecteur ou tronc de cône déflecteur (34, 44) éventuellement en combinaison avec des extensions verticales du cône lui-même, **caractérisée en ce que** :
ledit au moins un élément fixant est une barre de fixation et de direction, la base de la barre de fixation et de direction étant conçue pour dévier le flux, en le faisant passer à travers lesdits trous ou fentes ; et
ledit au moins un dispositif de redirection de flux (36, 46) étant une combinaison desdits trous ou fentes, éventuellement en combinaison avec lesdites extensions verticales, avec l'au moins un élément fixant (33, 43).

2. Buse de distributeur (30, 40) selon la revendication 1, dans laquelle ledit au moins un élément fixant (33, 43) est vertical ou incliné vers la paroi intérieure ou extérieure dudit arbre.

3. Buse de distributeur (30, 40) pour une charge biphasique dans un réacteur à lit fixe selon la revendication 1 ou la revendication 2, dans laquelle :
ledit au moins un élément fixant comprend au moins une barre de fixation, conçue pour fixer le cône déflecteur ou tronc de cône déflecteur à la base dudit arbre (11) ;
ledit cône déflecteur ou tronc de cône déflecteur étant conçu pour modifier la direction d'au moins une partie de la charge biphasique en flux, le cône déflecteur ou tronc de cône déflecteur étant muni d'au moins une ouverture à espacement uniforme formée dans le cône déflecteur ou tronc de cône déflecteur ; et
ledit au moins un dispositif de redirection de flux comprenant des éléments de direction verticaux qui sont situés au niveau du bord dudit cône déflecteur ou tronc de cône déflecteur et sont alignés avec les centre desdites ouvertures, les éléments de direction verticaux étant conçus pour diriger le flux de la charge biphasique.

4. Buse de distributeur pour une charge biphasique dans un réacteur à lit fixe selon l'une quelconque des revendications précédentes, comprenant en outre :
une section d'accélération (35) qui est située à l'extrémité de l'arbre (31) la plus proche dudit cône déflecteur ou tronc de cône déflecteur (34), la section d'accélération (35) étant conçue pour élever la vitesse du flux biphasique et ainsi améliorer sa distribution,
ledit au moins un élément fixant (33, 43) étant conçu pour fixer le cône déflecteur ou tronc de cône déflecteur (34) à la section d'accélération (35) ; et
ledit cône déflecteur ou tronc de cône déflecteur (34) étant conçu pour modifier la direction d'une partie du flux biphasique et étant muni, sur sa surface, d'un certain nombre de fentes à espacement uniforme (36), dont le rôle est de mieux diriger le flux de la charge biphasique.

5. Buse de distributeur (30, 40) pour une charge biphasique dans un réacteur à lit fixe selon l'une quelconque des revendications précédentes, comprenant en outre :
une section d'accélération (45) qui est située à l'extrémité de l'arbre (41) la plus proche dudit cône déflecteur ou tronc de cône déflecteur (44), la section d'accélération (45) étant conçue pour élever la vitesse du flux biphasique et ainsi améliorer sa distribution,
ledit au moins un élément fixant étant conçu pour fixer le cône de déflecteur ou tronc de cône déflecteur (44) à la section d'accélération (45) et diriger le flux de la charge biphasique, et
ledit tronc de cône déflecteur (44) étant conçu pour modifier la direction d'au moins une partie du flux de charge biphasique et étant muni d'au moins une ouverture à espacement uniforme (46) formée dans le cône.

6. Buse de distributeur (30, 40) pour un flux biphasique selon l'une quelconque des revendications précédentes, dans laquelle le cône déflecteur ou tronc de cône déflecteur présente un angle inclus dans la plage de 45° à 170°.

7. Buse de distributeur (30, 40) pour un flux biphasique selon l'une quelconque des revendications précédentes, dans laquelle le cône déflecteur ou tronc de cône déflecteur comprend un tronc de cône ayant un angle inclus raccordé soit (i) à un autre tronc de cône ayant un deuxième angle inclus, soit (ii) à un cône ayant un deuxième angle inclus.

8. Procédé de distribution d'une charge biphasique dans un réacteur à lit fixe à l'aide d'une buse de distributeur (30, 40) selon la revendication 1, le procédé comprenant :
la distribution du flux biphasique à l'aide du cône déflecteur ou tronc de cône déflecteur (34, 44), **caractérisée par** :
la redirection d'une partie du flux biphasique, à l'aide de l'au moins un dispositif de redirection de flux (33/36, 43/46).

9. Procédé de distribution d'une charge biphasique dans un réacteur à lit fixe à l'aide d'une buse de distributeur (30, 40) selon la revendication 8, comprenant en outre :
la fourniture du flux biphasique au cône déflecteur ou tronc de cône déflecteur (34, 44) à l'aide de l'arbre (31).

10. Procédé de distribution d'une charge biphasique dans un réacteur à lit fixe à l'aide d'une buse de distributeur (30, 40) selon la revendication 8 ou la revendication 9, comprenant en outre :
l'accélération du flux biphasique avant qu'il atteigne le cône déflecteur ou tronc de cône déflecteur (34, 44).
